# FASCICULE DE BREVET EUROPEEN

(11) **EP 3 114 795 B1**
(45) Date de publication et mention de la délivrance du brevet: **28.07.2021**
(21) Numéro de dépôt: 15708488.0
(22) Date de dépôt: 04.03.2015
(51) Int. Cl.: H04L 12/28, H04W 76/27, H04L 12/12, H04L 12/46, H04W 52/02

(54) **SYSTÈME ET PROCÉDÉ PERMETTANT DE RÉDUIRE LA CONSOMMATION ÉNERGÉTIQUE D'UN DISPOSITIF D'INTERCONNEXION**
SYSTEM UND VORRICHTUNG ZUR ERMÖGLICHUNG DER VERRINGERUNG DES ENERGIEVERBRAUCHS EINER VERBINDUNGSVORRICHTUNG
SYSTEM AND METHOD MAKING IT POSSIBLE TO REDUCE THE ENERGY CONSUMPTION OF AN INTERCONNECTION DEVICE

(30) Priorité: 06.03.2014 FR 1451828
(43) Date de publication de la demande: 11.01.2017
(73) Titulaire: Sagemcom Broadband SAS, 92500 Rueil-Malmaison (FR)
(72) Inventeur: MASERA, Eric, F-92500 Rueil Malmaison (FR); DANGY-CAYE, Nicolas, F-92500 Rueil Malmaison (FR); ROCQUELAY, Antonie, F-92500 Rueil Malmaison (FR)
(74) Mandataire: Cabinet Le Guen Maillet
(86) Numéro de dépôt international: PCT/EP2015/054503
(87) Numéro de publication internationale: WO 2015/132296

(56) Documents cités:
- US-A1- 2008 120 423
- US-A1- 2008 120 423
- US-A1- 2010 332 212
- US-A1- 2010 332 212

## Description

La présente invention concerne un procédé et un système mettant en œuvre un dispositif d'interconnexion de premier et second réseaux de communication, tel qu'une passerelle résidentielle, et permettant de réduire la consommation énergétique du dispositif d'interconnexion.

Un dispositif d'interconnexion de réseaux est un appareil permettant de connecter une pluralité de réseaux de communication entre eux. Des appareils connectés sur deux réseaux différents peuvent alors communiquer entre eux. Lorsque le dispositif d'interconnexion est une passerelle résidentielle, il permet à un abonné de pouvoir recevoir chez lui, via un premier réseau tel que le réseau Internet, des services de type navigation Internet, télévision ou voix sur IP (VoIP : « Voice Over Internet Protocol » en terminologie anglo-saxonne). Une passerelle résidentielle permet de plus à un abonné en situation de mobilité en dehors de son domicile d'accéder, via Internet, à des contenus stockés ou des services mis en œuvre soit directement sur ladite passerelle résidentielle, soit sur un équipement connecté à un second réseau tel qu'un réseau local (LAN : « Local Area Network » en terminologie anglo-saxonne).

Il est connu de la publication US2012/332212 une plate forme d'interconnexion de réseau pouvant être émulée par un autre dispositif, système ou appareil informatique de telle sorte qu'au moins un comportement de réseau du dispositif informatique émulé et/ou une application exécutée sur celui-ci soit maintenu par la plate-forme émulée. Lorsqu'elle est émulée, la plate forme peut fonctionner en mode d'économie d'énergie ou dans tout autre état ou mode de fonctionnement (éventuellement réduit). Les conditions nécessitant l'arrêt de l'émulation peuvent être détectées par le dispositif émulé. Lors de la détection de conditions nécessitant l'arrêt de l'émulation, des paramètres opérationnels ou autres peuvent être fournis à la plateforme et elle peut passer en mode opérationnel complet ou autre d'une manière transparente. Pour permettre un accès à ces services à tout moment, il est d'usage de maintenir en mode actif (*i.e.* maintenir allumé) en permanence la passerelle résidentielle, ou plus généralement, le dispositif d'interconnexion. Cet usage a pour défaut majeur d'entraîner une surconsommation d'énergie qui n'est pas forcément justifiée par les besoins réels d'accès aux services délivrés par la passerelle résidentielle. Afin d'économiser de l'énergie, l'abonné peut manuellement éteindre sa passerelle résidentielle, ce qui l'oblige à redémarrer (*i.e* rallumer) la passerelle résidentielle en cas de besoin de service. Redémarrer la passerelle résidentielle semble envisageable pour certains services tels que la navigation Internet et à condition que la passerelle domestique soit à portée de l'utilisateur. Toutefois, d'autres services s'avèrent fortement dégradés, voire incompatibles avec cette méthode simple de redémarrage manuel. Par exemple, un utilisateur en situation de mobilité et donc dans l'impossibilité d'accéder physiquement à la passerelle résidentielle n'a plus accès à aucun service nécessitant l'utilisation de la passerelle résidentielle. Cela concerne par exemple les applications de programmation à distance d'un enregistrement vidéo sur un enregistreur vidéo personnel (PVR : « Personal Video Recorder » en terminologie anglo-saxonne) connecté sur le second réseau. Une demande de mise en œuvre de service nécessitant l'utilisation de la passerelle résidentielle, risque donc de ne jamais aboutir si ladite demande est faite au moment où la passerelle résidentielle est à l'arrêt.

Le problème résolu par la présente invention consiste à réduire la consommation énergétique d'un dispositif d'interconnexion d'un premier et d'un second réseau, tout en assurant l'aboutissement de toutes demandes de mise en œuvre de service nécessitant l'utilisation dudit dispositif d'interconnexion.

L'invention est définie dans les revendications annexées. Selon un premier aspect de la présente invention, la présente invention concerne un procédé mis en œuvre par un dispositif d'interconnexion d'un premier réseau de communication et d'un second réseau de communication, permettant de réduire la consommation énergétique dudit dispositif d'interconnexion tout en permettant l'aboutissement de demandes de mise en œuvre de service nécessitant l'utilisation dudit dispositif d'interconnexion, ledit dispositif d'interconnexion comprenant une pluralité de composants fonctionnant suivant un mode actif ou un mode de veille. Ledit dispositif d'interconnexion effectue les étapes suivantes: passer en mode actif la pluralité de composants sous le contrôle d'un processeur secondaire, le processeur secondaire étant un composant du dispositif d'interconnexion continuellement en mode actif et contrôlant les passages en mode actif de la pluralité de composants à des instants déterminés, le passage en mode de veille étant contrôlé par le dispositif d'interconnexion suite à une fin de mise en œuvre de service; suite au passage en mode actif de la pluralité de composants, envoyer une requête d'interrogation à un serveur de gestion de service connecté au premier réseau de communication pour vérifier l'existence de demandes de service ; recevoir une réponse à la requête d'interrogation ; et passer en mode de veille la pluralité de composants par le processeur secondaire à un instant dépendant de la réponse reçue.

L'avantage de ce procédé est que les temps de passage en mode actif de la pluralité de composants du dispositif d'interconnexion dépendent des demandes de mise en œuvre de service formulées, ce qui permet de diminuer significativement la consommation d'énergie. Par exemple, la pluralité de composants du dispositif d'interconnexion passe peu de temps en mode actif si aucune demande de mise en œuvre de service n'a été formulée. De plus, l'utilisation d'un serveur de gestion de service permet d'assurer que les demandes de mise en œuvre de service pourront être prises en compte par le dispositif d'interconnexion, même si le dispositif d'interconnexion est en mode de veille au moment où les demandes de mise en œuvre de service sont formulées. Par ailleurs, les passages en mode actif à des instants déterminés permettent d'assurer que le temps d'attente de mise en œuvre d'un service ne sera pas trop long. Par ailleurs, l'utilisation d'un processeur secondaire pour contrôler les instants de passages en mode actif de la pluralité de composants évite à un utilisateur de devoir manipuler le dispositif d'interconnexion pour mettre le dispositif d'interconnexion en mode actif. Le passage en mode de veille est, de manière préférée, géré par le processeur principal. Dans une mise en œuvre alternative, la mise en mode de veille pourrait aussi être gérée par le processeur secondaire.

Selon un mode de réalisation, le processeur secondaire contrôle les instants déterminés de passage en mode actif de la pluralité de composants en utilisant un paramètre de contrôle.

Selon un autre mode de réalisation, le processeur secondaire est en charge de réveiller le processeur principal qui lui-même sera en charge du passage en mode actif de la pluralité de composants.

L'utilisation d'un paramètre de contrôle permet de simplifier le contrôle des instants déterminés de passage en mode actif du dispositif d'interconnexion.

Selon un mode de réalisation, un processeur principal compris dans la pluralité de composants modifie le paramètre de contrôle du processeur secondaire permettant de contrôler les instants déterminés de passage en mode actif de la pluralité de composants.

La modification du paramètre de contrôle du processeur secondaire par un processeur principal permet de faciliter la modification à distance dudit paramètre de contrôle.

Selon un mode de réalisation, lorsque ladite réponse contient une information représentative d'une demande de mise en œuvre d'un service, le dispositif d'interconnexion met en œuvre un service dépendant d'un service demandé dans la demande de mise en œuvre de service.

De cette manière un service qui a été formulé alors que le dispositif d'interconnexion était en mode de veille peut être pris en compte par le dispositif d'interconnexion.

Selon un mode de réalisation, le service demandé dans la demande de mise en œuvre de service est destiné à être mis en œuvre par un équipement connecté au second réseau, le service dépendant du service demandé dans la demande de mise en œuvre de service étant un service d'accès au second réseau.

De cette manière, les communications entre le premier et le second réseau seront assurées durant la mise en œuvre du service demandé.

Selon un mode de réalisation, la demande de mise en œuvre de service est préalablement reçue par le serveur de gestion de service de la part d'un équipement distant connecté au premier réseau de communication.

Le procédé permet donc à un utilisateur en situation de mobilité de formuler une demande de mise en œuvre de service à tout moment avec un équipement distant, même si la passerelle est en mode de veille.

Selon un mode de réalisation, une information de modification du paramètre de contrôle du processeur secondaire permettant au processeur secondaire de déterminer les instants de passage en mode actif de la pluralité de composants est obtenue par le dispositif d'interconnexion suite au passage de la pluralité de composants en mode actif.

L'utilisation de l'information de modification du paramètre de contrôle du processeur secondaire permet d'adapter les instants de passage en mode actif en fonction des besoins de mise en œuvre de service.

Selon un mode de réalisation, ladite réponse contient l'information de modification.

De cette manière, l'adaptation des instants de passage en mode actif en fonction des besoins de mise en œuvre de service peut être contrôlée à distance par le serveur de gestion de service qui possède une connaissance précise des services demandés.

Selon un mode de réalisation, l'information de modification est obtenue à partir d'une information provenant d'un utilisateur.

De cette manière, l'adaptation des instants de passage en mode actif en fonction des besoins de mise en œuvre de service peut être contrôlée par un utilisateur qui connaît ses besoins réels.

Selon un mode de réalisation, le paramètre de contrôle est représentatif d'une période de passage en mode actif de la pluralité de composants.

De cette manière, les passages en mode actif suivront un cycle régulier correspondant à la période de passage en mode actif.

Selon un deuxième aspect de la présente invention, la présente invention concerne un procédé mis en œuvre par un serveur de gestion de service connecté à un premier réseau de communication, permettant de réduire la consommation énergétique d'un dispositif d'interconnexion du premier réseau et d'un second réseau de communication, tout en permettant l'aboutissement de demandes de mise en œuvre de service nécessitant l'utilisation dudit dispositif d'interconnexion. En cas de réception par le serveur de gestion de service d'une requête d'interrogation en provenance du dispositif d'interconnexion, le serveur de gestion de service effectue les étapes suivantes : vérifier la présence d'une demande de mise en œuvre de service dans une liste de demandes de mise en œuvre de service et ; si une demande de mise en œuvre de service est présente, envoyer une réponse au dispositif d'interconnexion contenant une information représentative de la demande de mise en œuvre de service reçue, lesdites requêtes d'interrogation ayant été envoyées à des instants déterminés correspondant à des passages en mode actif du dispositif d'interconnexion contrôlés par un processeur secondaire du dispositif d'interconnexion.

L'utilisation d'un serveur de gestion de service permet d'assurer que les demandes de mise en œuvre de service pourront être prises en compte par le dispositif d'interconnexion, même si le dispositif d'interconnexion est en mode de veille au moment où les demandes de mise en œuvre de service sont formulées.

Selon un mode de réalisation, le serveur de gestion de service interprète chaque demande de mise en œuvre de service afin de déterminer un paramètre représentatif pour la demande de mise en œuvre de service et le paramètre représentatif déterminé est sauvegardé dans la liste de demandes de mise en œuvre de service.

De cette manière, le dispositif mettant en œuvre le service n'a pas à interpréter la demande de mise en œuvre de service et peut utiliser directement les paramètres résultant de l'interprétation par le serveur.

Selon un mode de réalisation, en cas de réception d'une demande de mise en œuvre de service de la part d'un équipement distant connecté au premier réseau, le serveur de gestion de service détermine si le dispositif d'interconnexion est dans un mode actif ou dans un mode de veille et, si le dispositif d'interconnexion est dans un mode actif, le serveur de gestion de service autorise l'équipement distant à contacter directement le dispositif d'interconnexion.

En autorisant un équipement distant à contacter directement le dispositif d'interconnexion, le serveur réduit son implication dans la mise en œuvre d'un service, ce qui simplifie les tâches qu'il a à accomplir.

Selon un mode de réalisation, en cas de réception d'une requête d'interrogation en provenance du dispositif d'interconnexion, le serveur de gestion de service obtient une information de modification destinée à modifier un paramètre de contrôle du processeur secondaire du dispositif d'interconnexion permettant de contrôler les instants de passage en mode actif du dispositif d'interconnexion, et envoie une réponse au dispositif d'interconnexion contenant l'information de modification en vue de modifier ledit paramètre de contrôle.

De cette manière, le serveur de gestion de service peut contrôler à distance les passages en mode actif de la passerelle.

Selon un troisième aspect de la présente invention, la présente invention concerne un procédé mis en œuvre par un équipement distant connecté à un premier réseau de communication, permettant de réduire la consommation énergétique d'un dispositif d'interconnexion du premier réseau de communication et d'un second réseau de communication, tout en permettant l'aboutissement de demandes de mise en œuvre de service nécessitant l'utilisation dudit dispositif d'interconnexion. En cas d'échec d'une demande de mise en œuvre de service faite par l'équipement distant auprès du dispositif d'interconnexion, l'équipement distant effectue les étapes suivantes : envoyer ladite demande de mise en œuvre de service à un serveur de gestion de service, et mettre en œuvre le service après réception d'une notification provenant du serveur de gestion de service indiquant le passage dans un mode actif du dispositif d'interconnexion, le serveur de gestion de service ayant été prévenu dudit passage par la réception d'une requête d'interrogation de la part du dispositif d'interconnexion, les requêtes d'interrogation étant envoyées à des instants déterminés correspondant à des passages en mode actif du dispositif d'interconnexion contrôlés par un processeur secondaire du dispositif d'interconnexion.

L'envoi d'une demande de mise en œuvre de service à un serveur de gestion de services en cas d'échec de ladite demande de mise en œuvre de service auprès du dispositif d'interconnexion permet d'assurer que cette demande de mise en œuvre de service sera prise en compte par le dispositif d'interconnexion.

Selon un quatrième aspect de la présente invention, la présente invention concerne un système permettant de réduire la consommation énergétique d'un dispositif d'interconnexion d'un premier réseau et d'un second réseau de communication, tout en assurant l'aboutissement de demandes de mise en œuvre de service nécessitant l'utilisation dudit dispositif d'interconnexion. Le système comprend un dispositif d'interconnexion d'un premier réseau de communication et d'un second réseau de communication, le système d'interconnexion étant apte à fournir des services, et un équipement distant connecté au premier réseau de communication apte à faire des demandes de mise en œuvre de service, le dispositif d'interconnexion comprenant une pluralité de composants fonctionnant suivant un mode actif ou un mode de veille. Le système comprend: un serveur de gestion de service destiné à être connecté au premier réseau de communication et apte à recevoir des demandes de services de la part de l'équipement distant et à transmettre ces demandes de services au dispositif d'interconnexion en cas de réception d'une requête d'interrogation en provenance du dispositif d'interconnexion indiquant un passage en mode actif ; et le dispositif d'interconnexion comprend: un processeur secondaire, continuellement en mode actif, contrôlant les passages en mode actif de la pluralité de composants à des instants déterminés ; des moyens pour envoyer, suite à un passage en mode actif de la pluralité de composants, une requête d'interrogation au serveur de gestion de service ; des moyens pour recevoir une réponse à la requête d'interrogation, et ; des moyens pour déterminer un instant de passage en mode de veille en fonction de la réponse reçue.

Ce système possède les mêmes avantages que ceux mentionnés envers les aspects précédents.

Selon un cinquième aspect de la présente invention, la présente invention concerne un dispositif de type dispositif d'interconnexion d'un premier réseau et d'un second réseau, comprenant une pluralité de composants fonctionnant suivant un mode actif ou un mode de veille, caractérisé en ce que le dispositif comprend :
- un processeur secondaire, continuellement en mode actif, contrôlant les passages en mode actif de la pluralité de composants à des instants déterminés,
- des moyens pour envoyer, suite à un passage en mode actif de la pluralité de composants, une requête d'interrogation à un serveur de gestion de service,
- des moyens pour recevoir une réponse à la requête d'interrogation, et
- des moyens pour déterminer un instant de passage en mode de veille en fonction de la réponse reçue.

Ledit dispositif possède les mêmes avantages que ceux mentionnés envers le premier aspect.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter l'un quelconque des procédés mentionnés ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement un système apte à mettre en œuvre l'invention,
La Fig. 2A représente schématiquement un dispositif apte à mettre en œuvre un serveur ou un équipement distant selon la présente invention,
La Fig. 2B représente schématiquement un dispositif apte à mettre en œuvre une passerelle selon la présente invention,
La Fig. 3 représente schématiquement un exemple de mise en œuvre d'une application d'accès à des services à distance utilisant une passerelle, dans un système apte à mettre en œuvre l'invention tel que le système décrit en relation avec la Fig. 1,
La Fig. 4 représente schématiquement un algorithme, mis en œuvre par la passerelle, permettant d'assurer une continuité de service,
La Fig. 5 représente schématiquement un algorithme, mis en œuvre par le serveur, lors de la réception d'une requête,
La Fig. 6 illustre schématiquement un algorithme, mis en œuvre par l'équipement distant, lorsque celui-ci transmet une demande de mise en œuvre de service à un serveur,
La Fig. 7 illustre schématiquement un algorithme, mis en œuvre par l'équipement distant, en cas de réception d'une notification de la part du serveur indiquant le prochain passage de la passerelle résidentielle en mode actif,
La Fig. 8 illustre schématiquement un algorithme, mis en œuvre par l'équipement distant, en cas de réception d'une notification d'accès direct à la passerelle résidentielle,
La Fig. 9 représente un exemple de mode de fonctionnement d'un processeur secondaire de la passerelle résidentielle, et
La Fig. 10 illustre schématiquement un exemple de comportement de la passerelle résidentielle au cours du temps.

La présente invention est adaptée à être mise en œuvre dans un système comportant un dispositif d'interconnexion reliant un premier réseau à un second réseau. Dans le cadre de l'invention, le dispositif d'interconnexion fonctionne suivant deux modes: un mode de veille dans lequel le dispositif d'interconnexion a une consommation énergétique minimale, mais empêchant toute communication avec le dispositif d'interconnexion, d'une part, et entre les deux réseaux, d'autre part ; un mode actif dans lequel les communications avec le dispositif d'interconnexion et entre les réseaux sont possibles, mais induisant une plus grande consommation énergétique. L'invention tente de minimiser la consommation énergétique globale du dispositif d'interconnexion en maximisant le temps passé en mode de veille. Toutefois, afin de permettre à toute demande de mise en œuvre de service nécessitant l'utilisation du dispositif d'interconnexion d'aboutir, le système comprend un serveur de gestion de service chargé de recevoir les demandes de mise en œuvre de service de la part d'équipements distants. L'invention concerne d'une part les demandes relatives à un service devant être mis en œuvre par le dispositif d'interconnexion, et d'autre part les demandes de mise en œuvre de service émanant d'un équipement distant connecté au premier réseau, mais dont la mise en œuvre doit se faire sur un équipement connecté au second réseau. Dans le cadre de l'invention, le serveur de gestion est interrogé régulièrement par le dispositif d'interconnexion afin que le dispositif d'interconnexion prenne connaissance des services dont la mise en œuvre est demandée. Pour ce faire, le dispositif d'interconnexion passe régulièrement dans le mode actif, ce qui permet au dispositif d'interconnexion d'envoyer une requête d'interrogation au serveur de gestion de service. Le dispositif repasse en mode de veille si, suite à la requête d'interrogation, le serveur de gestion de service répond qu'aucun service n'est demandé. Par contre, si des demandes de mises en œuvre de service existent, le dispositif d'interconnexion met en œuvre ces demandes et ne repasse en mode de veille que lorsque la mise en œuvre de chaque service demandé prend fin.

L'invention est détaillée par la suite, de manière illustrative, dans un mode de réalisation particulier dans lequel le dispositif d'interconnexion est une passerelle résidentielle.

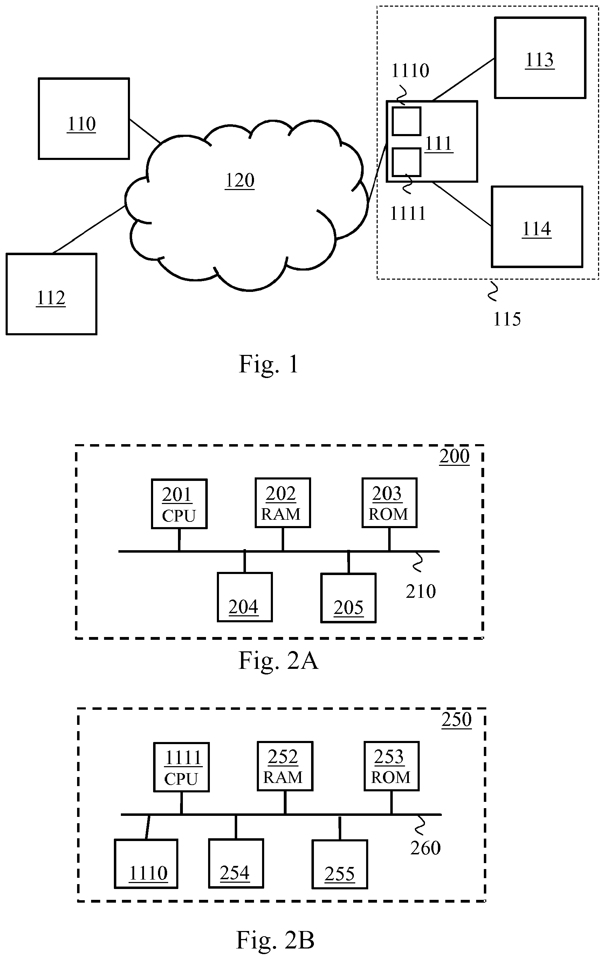

La **Fig. 1** représente un système apte à mettre en œuvre l'invention. Ce système comprend un réseau 120, tel que le réseau Internet, sur lequel sont connectés un équipement distant 112 et une passerelle résidentielle 111. Par souci de simplification, la passerelle résidentielle 111 est simplement dénommée *passerelle 111* par la suite.

La passerelle 111 peut offrir un certain nombre de services tels qu'un service de stockage de données, mais aussi faire l'interface entre le réseau internet et un LAN domestique 115 comprenant des équipements domestiques connectés à la passerelle 111. Afin de maximiser les économies d'énergie, la passerelle 111 est le plus souvent dans un mode de veille assurant une consommation d'énergie minimale. Toutefois, à des instants déterminés par un processeur secondaire 1110 contrôlant les passages en mode actif de la passerelle 111, la passerelle 111 passe dans un mode actif. Le passage en mode actif de la passerelle 111 permet de faire passer un certain nombre de composants de la passerelle 111 en mode actif et notamment un processeur principal 1111 gérant la mise en œuvre de services par la passerelle. Le passage en mode actif permet notamment à la passerelle de vérifier si des services sont à mettre en œuvre et, le cas échéant, de mettre en œuvre ces services.

L'équipement distant 112 peut être un ordinateur ou un appareil mobile, tel qu'une tablette ou un téléphone intelligent (« smartphone » en terminologie anglo-saxonne). Cet équipement distant peut être utilisé par un utilisateur pour faire une demande de mise en œuvre de service en utilisant par exemple une interface graphique. L'équipement 112 peut aussi être un serveur géré par un fournisseur d'accès à Internet ayant fourni la passerelle 111 et utilisé, par exemple, pour mettre à jour un logiciel embarqué dans la passerelle 111.

Les équipements domestiques peuvent offrir des services divers comme par exemple un service d'enregistrement de vidéo par un PVR 113 ou un service de stockage de données comme un disque dur réseau 114. Ces services nécessitent l'utilisation de la passerelle 111 qui, dans tous les cas, doit fournir un service d'accès à Internet.

Le système comprend de plus un serveur de gestion de service 110. Le serveur de gestion de service 110 (que nous appelons simplement *serveur* par la suite) est, entre autres, en charge de collecter et de gérer des demandes de mise en œuvre de service que l'utilisateur et/ou l'opérateur Internet peuvent formuler en utilisant l'équipement distant 112.

L'équipement distant 112, le serveur 110 et la passerelle 111 sont interconnectés par le réseau 120, de sorte que ces équipements peuvent communiquer lorsqu'ils sont en mode actif, ce qui est toujours le cas pour le serveur 110. Les connexions au LAN peuvent être des connexions filaires assurées par des câbles Ethernet, ou sans-fil, en utilisant par exemple des connexions Wi-Fi.

Nous verrons par la suite que l'équipement distant 112 peut aussi communiquer directement avec la passerelle 111 dans certains cas.

Les communications entre l'équipement distant 112, le serveur 110 et la passerelle 111 peuvent utiliser des protocoles classiques, comme les protocoles HTTP (protocole de transfert hypertexte : « HyperText Transfer Protocol » en anglais) et SOAP (protocole d'accès par objet simplifié : « Simple Object Access Protocol » en anglais), ou une architecture de type REST (Transfert de représentation d'état : « REpresentational State Transfer » en anglais). Les communications avec l'équipement distant 112 peuvent utiliser des protocoles plus spécifiques dépendant de l'équipement distant 112 utilisé. Par exemple, dans le cas d'un téléphone intelligent, les communications peuvent prendre la forme de textos (ou SMS (« Short Message Service » en terminologie anglo-saxonne) ou de courriels. Toutefois, d'autres protocoles, comme des protocoles propriétaires, peuvent aussi être utilisés.

La **Fig. 2A** illustre schématiquement un exemple d'architecture matérielle d'un dispositif 200 apte à mettre en œuvre le serveur 110 ou l'équipement distant 112. Le dispositif 200 comporte, reliés par un bus de communication 210 : un processeur ou CPU (« Central Processing Unit» en anglais) 201; une mémoire vive RAM (« Random Access Memory » en anglais) 202; une mémoire morte ROM (« Read Only Memory » en anglais) 203; une unité de stockage 204 ou un lecteur de support de stockage, tel qu'un lecteur de cartes SD (« Secure Digital » en anglais) ou un disque dur HDD (« Hard Disk Drive » en anglais); au moins une interface 205 permettant d'échanger des données avec d'autres équipements. L'interface 205 permet au serveur 110 d'échanger des données avec l'équipement distant 112 et la passerelle 111 en utilisant le réseau 120. L'interface 205 permet à l'équipement distant 112 d'échanger des données avec le serveur 110 et la passerelle 111 aussi en utilisant le réseau 120.

Le processeur 201 est capable d'exécuter des instructions chargées dans la RAM 202 à partir de la ROM 203, d'une mémoire externe (non représentée), d'un support de stockage, ou du réseau 120. Lorsque le dispositif 200 est mis sous tension, le processeur 201 est capable de lire de la RAM 202 des instructions et de les exécuter. Ces instructions forment un programme d'ordinateur causant la mise en œuvre, par le processeur 201, de tout ou partie des algorithmes et étapes décrits par la suite en relation avec le serveur 110 ou l'équipement distant 112.

La **Fig. 2B** illustre schématiquement un exemple d'architecture matérielle d'un dispositif 250 apte à mettre en œuvre la passerelle 111. Le dispositif 250 comporte, reliés par un bus de communication 260 : un processeur principal ou CPU (« Central Processing Unit » en anglais) correspondant au processeur principal 1111 de la figure 1; une mémoire vive RAM (« Random Access Memory » en anglais) 252; une mémoire morte ROM (« Read Only Memory » en anglais) 253 ; une unité de stockage 254 ou un lecteur de support de stockage, tel qu'un lecteur de cartes SD (« Secure Digital » en anglais) ou un disque dur HDD (« Hard Disk Drive » en anglais); un ensemble d'interfaces 255 permettant d'échanger des données avec d'autres équipements. Dans le cas de la passerelle 111, le dispositif 250 échange des données avec les équipements 113 et 114 connectés sur le LAN 115, ou avec le serveur 110 et l'équipement distant 112 à travers le réseau 120. Le dispositif 250 comporte en plus un processeur secondaire correspondant au processeur secondaire 1110 de la Fig. 1, tel qu'un microcontrôleur. Le processeur secondaire 1110 assure les passages en mode actif, et peut également être en charge des passages en mode de veille de la passerelle 111.

Le processeur secondaire 1110 reste constamment maintenu dans un mode actif, alors qu'une pluralité de composants de la passerelle 111 comprenant le processeur principal 1111 sont le plus souvent dans un mode de veille permettant de réduire la consommation d'énergie. Comme nous le verrons plus loin, dans un mode de réalisation particulier, le mode de veille est obtenu par une coupure de l'alimentation électrique de ladite pluralité de composants de la passerelle 111. Dans un mode de réalisation préféré, la coupure de l'alimentation électrique est commandée par le processeur principal 1111. Dans un autre mode de réalisation, la coupure de l'alimentation électrique peut aussi être commandée par le processeur secondaire 1110. Le processeur secondaire 1110 contrôle la réalimentation électrique de ladite pluralité de composants de la passerelle 111 pour assurer le passage en mode actif de la passerelle 111. Le processeur secondaire 1110 possède des paramètres ajustables dont l'ajustement est contrôlé par le processeur principal 1111. Parmi les paramètres ajustables par le processeur principal 1111, un paramètre *τ* permet de déterminer des instants de passage de la passerelle 111 en mode actif τ peut, par exemple, représenter une durée pendant laquelle la passerelle doit rester en mode de veille ou encore une période de passage en mode actif. Par la suite, par mesure de simplification, nous appelons le paramètre *τ* permettant de déterminer les instants de passage de la passerelle 111 en mode actif *paramètre de contrôle τ.*

Le processeur principal 1111 est capable d'exécuter des instructions chargées dans la RAM 252 à partir de la ROM 253, d'une mémoire externe (non représentée), d'un support de stockage, ou du réseau 120. Lorsque le dispositif 250 est mis en mode actif, le processeur principal 1111 est capable de lire de la RAM 252 des instructions et de les exécuter. Ces instructions forment un programme d'ordinateur causant la mise en œuvre, par le processeur principal 1111, de tout ou partie des algorithmes et étapes décrits par la suite en relation avec la passerelle 111 à l'exception de ce qui concerne le processeur secondaire 1110. Le processeur secondaire 1110 est aussi capable d'exécuter des instructions chargées dans une RAM à partir d'une ROM, d'une mémoire externe (non représentées), d'un support de stockage, ou du réseau 120. Lorsque le dispositif 250 est alimenté, le processeur secondaire 1110 est capable de lire de la RAM des instructions et de les exécuter. Ces instructions forment un programme d'ordinateur causant la mise en œuvre, par le processeur secondaire 1110, de tout ou partie des algorithmes et étapes décrits par la suite en relation avec le processeur secondaire 1110.

Dans un mode de réalisation particulier, la passerelle 111 possède de plus une interface physique (non représentée), sous forme d'interrupteur ou de bouton poussoir, permettant à un utilisateur de mettre manuellement la passerelle 111 en mode de veille ou en mode actif.

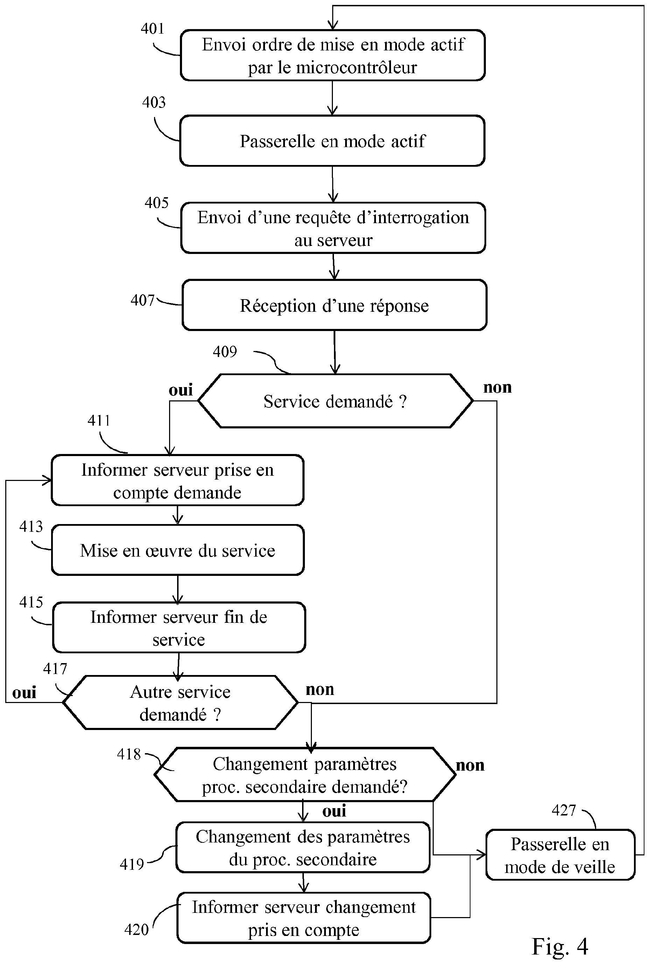

Tout ou partie des algorithmes et étapes décrits par la suite peut ainsi être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). Chaque module représenté au sein des Figs. 4 à 9 décrites ci-après peut ainsi correspondre à une mise en œuvre logicielle ou à une mise en œuvre matérielle. Cela signifie que seule une partie desdits modules peut être mise en œuvre sous forme logicielle alors que le reste desdits modules peut être mis en œuvre sous forme matérielle.

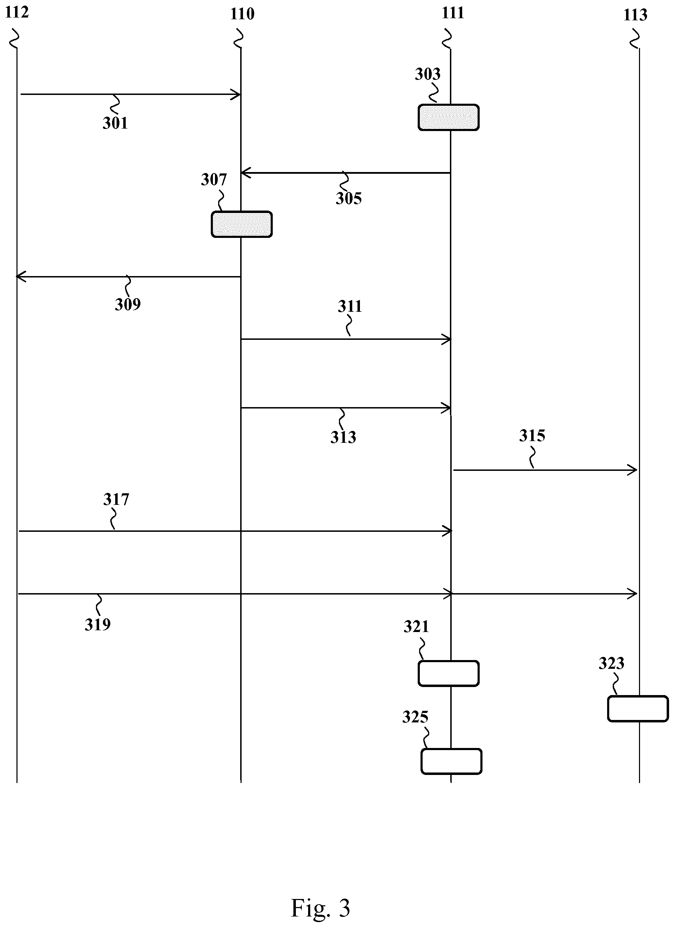

La **Fig. 3** représente un exemple de mise en œuvre d'échanges de données dans le cadre d'une application d'accès à distance à des services mis en œuvre par la passerelle 111 ou par des équipements du LAN 115. Dans le cadre de cette application, l'utilisateur, par l'intermédiaire de l'équipement distant 112, fait une demande de mise en œuvre de service. Cette demande de mise en œuvre de service est envoyée au serveur 110 par l'équipement distant 112 dans une étape 301.

De son côté, indépendamment de la demande de mise en œuvre de service effectuée par l'équipement distant 112, la passerelle 111 passe d'un mode de veille à un mode actif dans une étape 303. Les passages en mode actif sont contrôlés par le processeur secondaire 1110 de la passerelle 111. Les passages en mode actif se produisent à des instants déterminés, ces instants étant paramétrables sous le contrôle du serveur 110 et/ou de la passerelle 111. Suite à ce passage en mode actif, la passerelle 111 envoie, lors d'une étape 305, une requête d'interrogation au serveur 110. Cette requête d'interrogation a pour objectif, d'une part, d'informer le serveur 110 du passage en mode actif de la passerelle 111 et, d'autre part, d'interroger le serveur 110 sur l'existence éventuelle de demandes de mise en œuvre de service. Suite à cette requête d'interrogation, le serveur 110 vérifie, lors d'une étape 307, dans une liste de demandes de mise en œuvre de service, si des mises en œuvre de service ont été demandées.

Dans l'exemple de la Fig. 3, ladite liste contient au moins la demande de mise en œuvre de service reçue par le serveur 110 lors de l'étape 301. Dans ce cas, le serveur 110 envoie, lors d'une étape 309, une notification à l'équipement distant 112 lui indiquant que la passerelle 111 est disponible pour mettre en œuvre le service demandé. Le serveur 110 envoie ensuite à la passerelle 111, dans une étape 311, une demande de modification du paramètre de contrôle *τ* . Dans une étape 313, le serveur 110 envoie à la passerelle 111 une description du service demandé, ledit service étant destiné à être mis en œuvre par la passerelle.

Dans une variante de réalisation des étapes 311 et 313, le serveur 110 envoie à la passerelle 111 une requête unique comprenant la demande de modification du paramètre de contrôle *τ* et la description du service demandé.

Dans une autre variante de réalisation, le serveur 110 envoie uniquement la description du service demandé. Dans ce cas, la passerelle 111 déduit à partir de la description du service demandé, le paramètre de contrôle τ à appliquer au processeur secondaire 1110. Par exemple, la passerelle 111 bloque le passage en mode de veille tant que la réalisation du service n'est pas terminée.

Dans une variante de réalisation de l'étape 313, le service demandé est destiné à être mis en œuvre par un équipement du LAN 115, tel que le PVR 113 ou le disque dur réseau 114. Dans ce cas la description du service demandé est transmise dans une étape 315 à l'équipement concerné du LAN 115. On peut noter que, même si le service demandé est destiné à être mis en œuvre par un équipement du LAN 115, dans tous les cas, la passerelle 111 doit mettre en œuvre un service d'accès au LAN 115. Par conséquent, la passerelle 111 doit rester dans le mode actif tant que le service mis en œuvre par l'équipement du LAN 115 n'est pas terminé.

Dans une variante de réalisation de l'étape 309, la notification envoyée à l'équipement distant 112 contient aussi une information indiquant à l'équipement distant 112 que, pour la mise en œuvre du service demandé, l'équipement distant 112 doit contacter directement la passerelle 111. Dans ce cas, lors d'une étape 317, l'équipement distant 112 envoie directement à la passerelle 111 une demande de modification du paramètre de contrôle *τ* et une description du service demandé.

La notification envoyée à l'équipement distant 112 peut aussi indiquer que, pour la mise en œuvre du service demandé, l'équipement distant 112 doit contacter directement un équipement du LAN 115. Dans ce cas, lors d'une étape 319, l'équipement distant 112 envoie directement à la passerelle 111 une demande de modification du paramètre de contrôle *τ* et, audit équipement du LAN 115, une description du service demandé. Dans le cas des mises en œuvre directes, les étapes 311 et/ou 313 ne sont pas mises en œuvre.

L'obtention de la description du service, soit par la passerelle 111, soit par l'équipement du LAN 115, est suivie par la mise en œuvre du service demandé lors d'étapes 321 et 323. La réalisation de tous les services demandés permet à la passerelle 111 de repasser en mode de veille.

Comme nous l'avons vu lors de l'étape 303 de la Fig. 3, la passerelle 111 passe dans un mode actif sous le contrôle du processeur secondaire 1110. Dans un mode de réalisation particulier de l'invention, les passages en mode actif, permettant de vérifier auprès du serveur 110 l'existence de demandes de mise en œuvre de service, sont faits à intervalles réguliers. Le paramètre de contrôle *τ* représente dans ce mode de réalisation une période de passage en mode actif.

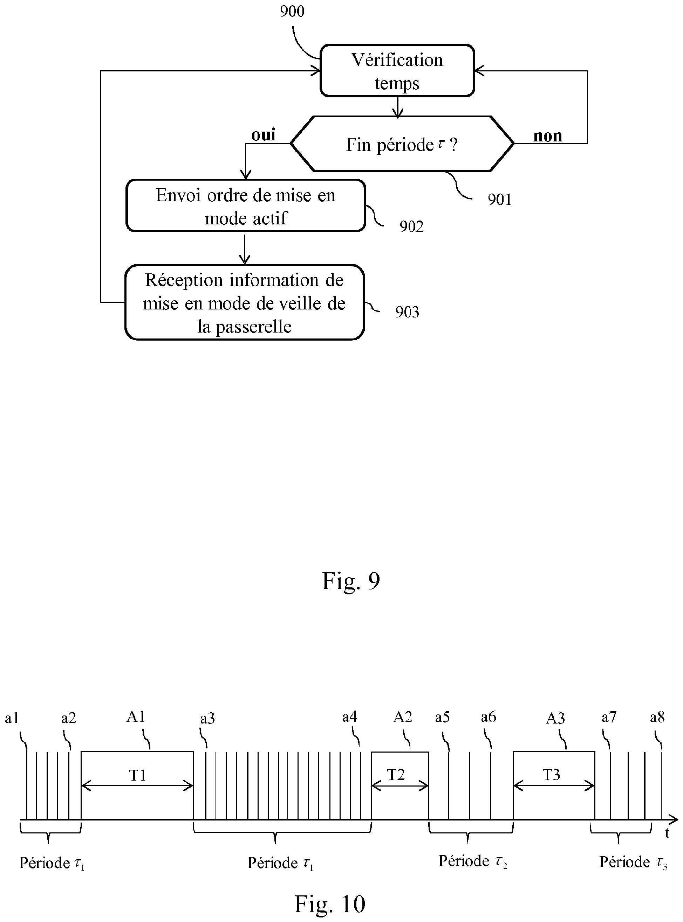

La **Fig. 10** donne un exemple de comportement de la passerelle 111 au cours du temps. Dans la Fig. 10, la passerelle 111 passe alternativement du mode actif au mode de veille. Deux types de passages en mode actif sont représentés:
- des barres verticales *ai* (*i* allant de 1 à 8) représentent des instants de passage en mode actif de courte durée. Ces passages en mode actif se produisent lorsqu'aucune demande de mise en œuvre de service n'a été reçue par le serveur 110. Dans ce cas, après avoir interrogé le serveur 110 et reçu une réponse lui indiquant qu'aucune mise en œuvre de service n'est demandée, la passerelle 111 retourne en mode de veille.
- des blocs *Ai* (*i* allant de 1 à 3) représentent des passages en mode actif de longue durée. Ces passages en mode actif se produisent lorsqu'au moins une demande de mise en œuvre de service a été reçue par le serveur 110. Dans ce cas, la passerelle 111 interroge le serveur 110 et est informée qu'au moins une mise en œuvre de service est demandée. La passerelle 111 met ensuite en œuvre le service demandé. Lorsqu'un service demandé est arrivé à son terme, la passerelle 111 repasse en mode de veille.

La durée d'un passage en mode actif dépend donc essentiellement de l'existence d'une demande de mise en œuvre de service et, en cas de demande de mise en œuvre de service, de la durée de mise en œuvre du service demandé. Dans la Fig. 10, les passages en mode actif *A1*, *A2* et *A3* ont des durées respectives distinctes *T1*, *T2* et *T3.* Les passages en mode actif *ai* ont une durée très courte correspondant au temps d'envoi d'une requête d'interrogation au serveur 110, et au temps de réception de la réponse à cette requête. Comme on peut le voir dans la Fig. 10, les passages en mode actif *ai* ont une période *τᵢ* (ou inversement une fréquence 1/*τᵢ*) distincte. En effet, les passages en mode actif entre *a1* et *a4* se font avec une période *τ*₁, les passages entre *a5* et *a6* se font avec une période *τ*₂ et les passages entre *a7* et *a8* se font avec une période τ₃, les périodes *τ*₁, *τ*₂, et τ₃ étant distinctes. Lors de la première utilisation de la passerelle 111, un paramétrage par défaut fixe la valeur de la période de passage de la passerelle 111 dans le mode actif. Nous verrons par la suite que la période de passage en mode actif peut être ajustée par le serveur 110 ou par la passerelle 111.

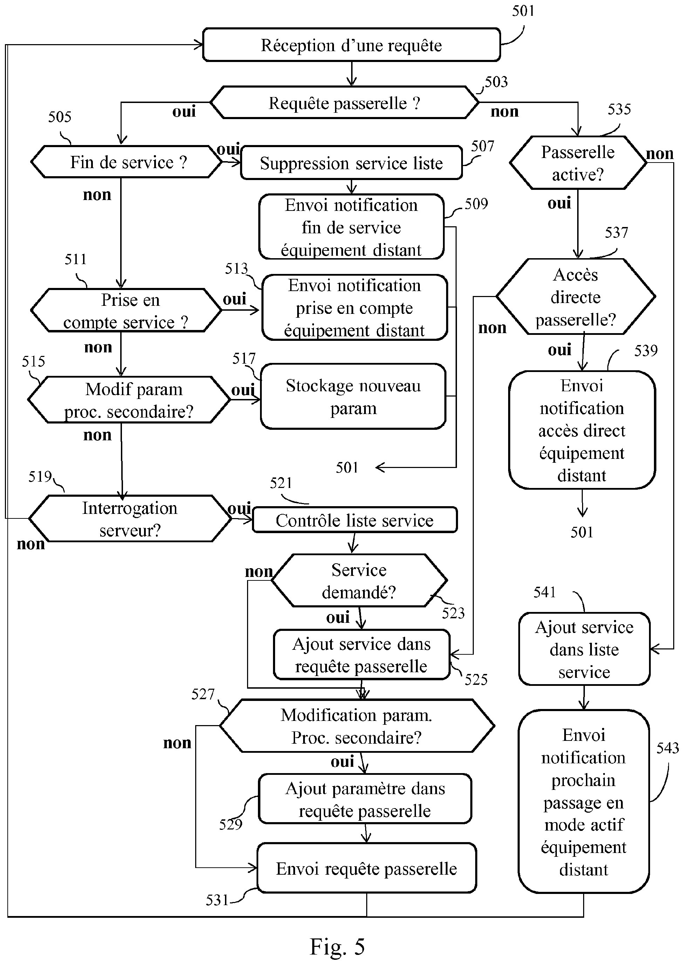

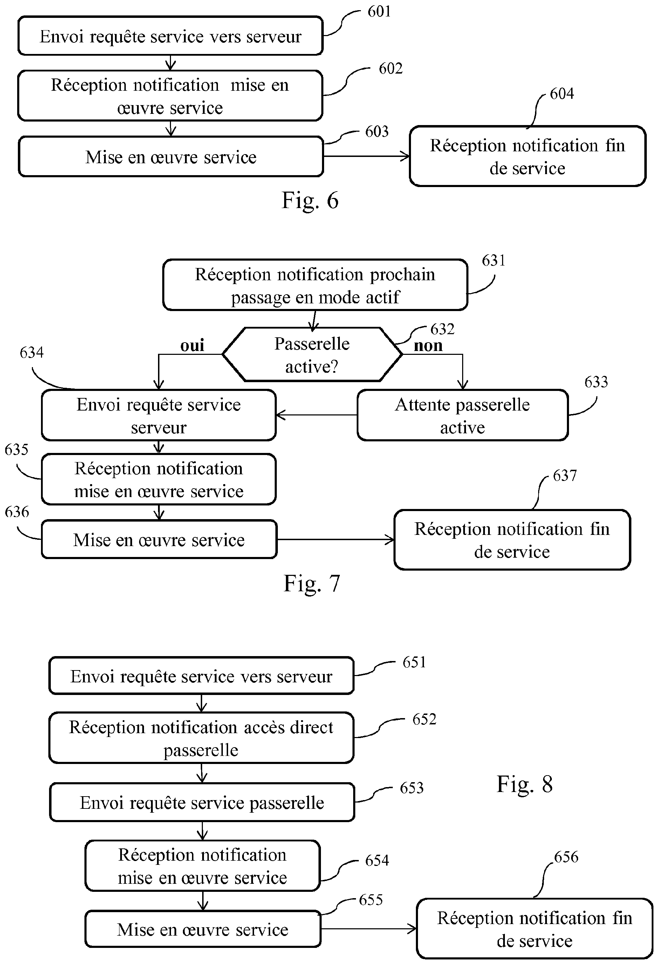

Les Figs. 4 à 8 représentent plus spécifiquement des étapes permettant de réduire la consommation énergétique de la passerelle 111, mises en œuvre par la passerelle 111 (Fig. 4), le serveur 110 (Fig. 5) et l'équipement distant 112 (Figs. 6 à 8). La Fig. 9 représente plus spécifiquement le fonctionnement du processeur secondaire 1110 de la passerelle 111.

La **Fig. 4** représente un algorithme, mis en œuvre par la passerelle 111, permettant de réduire la consommation énergétique de la passerelle.

Dans une étape 401, le processeur secondaire 1110 transmet un ordre de mise en mode actif à la pluralité de composants mis en mode de veille sur la passerelle 111. Suite à cet ordre, dans une étape 403, les composants non actifs de la passerelle 111 passent en mode actif. A sa sortie du mode de veille, la passerelle 111 interroge le serveur 110 pour déterminer si des mises en œuvre de service ont été demandées. Pour ce faire, dans une étape 405, la passerelle 111 envoie une requête d'interrogation au serveur 110. En réponse à cette requête, la passerelle 111 reçoit une réponse dans une étape 407. La réponse peut provenir soit du serveur 110, soit de l'équipement distant 112. Le contenu de la réponse est vérifié par la passerelle 111 lors d'une étape 409.

Si la réponse contient au moins une description d'un service, l'algorithme se poursuit par des étapes 411, 413, 415 et 417. Dans cette réalisation, chaque demande de mise en œuvre de service contenue dans la réponse est traitée séquentiellement en fonction de son ordre d'apparition dans ladite réponse. Pour chaque demande de mise en œuvre de service, la passerelle 111 envoie, dans l'étape 411, une requête d'acquittement au serveur 110 informant le serveur 110 que la passerelle 111 est prête à mettre en œuvre ledit service. La passerelle 111 met ensuite en œuvre le service demandé lors d'une étape 413. Lorsque la mise en œuvre du service prend fin, la passerelle 111 envoie, lors d'une étape 415, une requête indiquant la fin du service au serveur 110. La passerelle 111 vérifie la présence d'autres demandes de mises en œuvre de service lors d'une étape 417. Cette vérification peut se faire d'après la réponse précédemment reçue et/ou d'après au moins une autre requête intermédiaire reçue au cours de la mise en œuvre du service précédent. De telles requêtes intermédiaires peuvent provenir du serveur 110 ou de l'équipement distant 112. Si d'autres mises en œuvre de service sont demandées, la passerelle 111 réitère l'étape 411. Sinon, la passerelle 111 vérifie, lors d'une étape 418, si une modification du paramètre de contrôle *τ* a été demandée.

Les demandes de modification du paramètre de contrôle *τ* peuvent provenir du serveur 110 ou de la passerelle 111, mais ne peuvent être réalisées que quand la passerelle 111 est en mode actif. La passerelle 111 peut fixer le paramètre de contrôle *τ* en fonction de statistiques que la passerelle 111 obtient dans le cadre des services que la passerelle 111 a mis en œuvre. Par exemple, une statistique utilisée peut être la quantité de mises en œuvre de service demandées lors de chaque passage en mode actif. Si la quantité moyenne de demandes de mise en œuvre de service lors des passages en mode actif dépasse un premier seuil prédéfini, cela peut signifier que la passerelle 111 ne passe pas en mode actif suffisamment souvent. Dans ce cas, la passerelle 111 diminue la période de passage en mode actif en diminuant la valeur du paramètre de contrôle τ*.* Si la passerelle 111 détermine que la quantité moyenne de demandes de mise en œuvre de service lors des passages en mode actif est inférieure à un second seuil prédéfini, la passerelle 111 peut en déduire que les passages en mode actif se font trop souvent. Par conséquent, dans ce cas, la passerelle 111 augmente la période de passage en mode actif en augmentant la valeur du paramètre de contrôle *τ*. Dans une variante de réalisation, l'utilisateur peut fixer la valeur du paramètre de contrôle *τ* en utilisant pour cela un équipement du LAN 115, tel qu'un ordinateur avec une interface graphique permettant de contrôler la passerelle 111 via un serveur web mis en œuvre par la passerelle 111. Nous verrons par la suite comment le serveur 110 peut fixer une nouvelle valeur du paramètre de contrôle *τ*. Dans une autre variante de réalisation, l'utilisateur peut forcer la mise en mode actif de la passerelle 111 en utilisant l'interface physique, *e.g.* interrupteur ou bouton poussoir, de la passerelle 111.

Si un changement du paramètre de contrôle *τ* est effectivement demandé, la valeur du paramètre de contrôle *τ* modifiée est stockée par la passerelle 111 à la place de la valeur courante du paramètre de contrôle *τ*, lors d'une étape 419. La passerelle 111 envoie ensuite une requête au serveur 110 pour informer le serveur 110 du changement de valeur du paramètre de contrôle τ, lors d'une étape 420. Si aucune modification du paramètre de contrôle *τ* n'est demandée, la passerelle 111 passe en mode de veille lors d'une étape 427. Plus précisément, lors de l'étape 427, le processeur principal 1111 modifie la valeur du paramètre de contrôle *τ* avec la valeur du paramètre de contrôle *τ* préalablement stockée. Suite à la modification du paramètre de contrôle *τ*, le processeur principal 1111 provoque la mise en veille de ladite pluralité de composants de la passerelle 111. Dans un autre mode de réalisation, le processeur secondaire 1110 peut aussi provoquer la mise en mode de veille de la passerelle en lieu et place du processeur principal 1111.

Les étapes 411 à 417 représentent un processus où les demandes de mise en œuvre de service contenues dans la réponse transmise par le serveur 110 sont traitées séquentiellement dans leur ordre d'apparition dans ladite réponse. Dans une variante de réalisation, ces demandes de mise en œuvre de service sont traitées en parallèle.

Si lors de l'étape 409, la passerelle 111 constate qu'aucune demande de mise en œuvre de service n'est mentionnée dans la réponse transmise par le serveur 110, la passerelle 111 vérifie qu'aucun changement du paramètre de contrôle *τ* n'a été demandé. Pour cela, la passerelle 111 continue l'algorithme de la Fig. 4 directement avec les étapes 418, 419 et 420 déjà décrites. La passerelle 111 passe ensuite en mode de veille lors de l'étape 427.

Comme vu plus haut, le processeur secondaire 1110 est en charge de mettre régulièrement en mode actif la passerelle. Un exemple de mode de fonctionnement du processeur secondaire 1110 est détaillé en **Fig. 9****.**

Dans une étape 900, le processeur secondaire 1110 vérifie avec une fréquence élevée, supérieure à la fréquence de passage en mode actif 1/*τ*, la valeur d'une information de temps (ou valeur d'horloge) donnée par une horloge interne à la passerelle 111. Cette horloge interne indique une valeur d'horloge représentant le temps écoulé depuis la dernière mise en mode actif. La valeur d'horloge est remise à zéro à chaque passage en mode actif. La valeur d'horloge est ensuite comparée au paramètre de contrôle *τ*.

Si, lors d'une étape 901, l'horloge interne indique une valeur d'horloge inférieure à la valeur du paramètre de contrôle *τ*, le processeur secondaire 1110 revient à l'étape 900. Par contre, si l'horloge interne indique une valeur d'horloge supérieure ou égale à la valeur du paramètre de contrôle *τ*, le processeur secondaire 1110 envoie, dans une étape 902, un ordre de mise en mode actif à ladite pluralité de composants de la passerelle 111. Cet ordre de mise en mode actif peut se faire sous la forme d'une réalimentation électrique de ladite pluralité de composants.

Suite au passage en mode actif, le processeur secondaire 1110 se met dans un mode de fonctionnement dans lequel il ne peut plus envoyer d'ordre de mise en mode actif à ladite pluralité de composants. Dans ce mode de réalisation, le passage du processeur secondaire 1110 dans ce mode de fonctionnement ne nécessite pas l'intervention du processeur principal 1111.

Dans une étape 903, le processeur secondaire 1110 se met en attente d'une instruction du processeur principal 1111 lui indiquant le passage en mode de veille de ladite pluralité de composants. Dans un mode de réalisation préféré, la mise en mode de veille se fait sous le contrôle du processeur principal 1111. La réception de cette instruction par le processeur secondaire 1110 provoque le retour à l'étape 900. Dans un mode de réalisation alternatif de l'étape 903, après réception de l'instruction de la part du processeur principal 1111, le processeur secondaire 1110 met en mode de veille la pluralité de composants. La mise en mode de veille provoque le retour à l'étape 900.

Le serveur 110 permet de pallier les périodes d'inaccessibilité de la passerelle 111 dues aux passages de la passerelle 111 en mode de veille. Un algorithme mis en œuvre par le serveur 110 sur réception de requêtes est décrit en relation avec la **Fig. 5****.**

Lors d'une étape 501, le serveur 110 reçoit une requête. Cette requête pouvant provenir de la passerelle 111 ou de l'équipement distant 112, lors d'une étape 503, le serveur 110 détermine la provenance de la requête. Si la requête provient de la passerelle 111, le serveur 110 détermine le type de la requête. La détermination du type de la requête commence par une étape 505 au cours de laquelle le serveur 110 détermine si la requête est une requête de fin de service. Si c'est le cas, la requête permet d'identifier quel service a pris fin. Lors d'une étape 507, le serveur 110 supprime ledit service de la liste de demandes de mise en œuvre de service géré par le serveur. La fin du service est ensuite notifiée, lors d'une étape 509, à l'équipement distant 112 par l'envoi d'une notification de fin de service. Dans une variante de réalisation, la requête de fin de service est envoyée par l'équipement distant 112 et notifiée à la passerelle 111. L'envoi de la notification est dans tous les cas suivi par l'attente d'une nouvelle requête. La réception d'une nouvelle requête provoque le retour à l'étape 501.

Si la requête reçue n'est pas une requête de fin de service, le serveur 110 détermine, lors d'une étape 511, si cette requête est une requête de prise en compte d'un service. Si c'est le cas, la requête reçue par le serveur 110 permet d'identifier le service pris en compte par la passerelle 111. Le serveur 110 envoie ensuite, dans une étape 513, une notification à l'équipement distant 112 indiquant que la passerelle 111 est prête à mettre en œuvre le service qui a été pris en compte. La mise en œuvre du service peut alors débuter sur la passerelle 111 (et sur un équipement du LAN 115 si nécessaire) et l'équipement distant 112. L'envoi de la notification est dans tous les cas suivi par l'attente d'une nouvelle requête. La réception d'une nouvelle requête provoque le retour à l'étape 501.

Si la requête reçue n'est pas une requête de prise en compte de service, le serveur 110 détermine, lors d'une étape 515, si cette requête est une requête de notification d'une modification du paramètre de contrôle *τ*. Si c'est le cas, le serveur 110 stocke la valeur modifiée du paramètre de contrôle *τ* dans une étape 517. Le serveur 110 peut utiliser le paramètre de contrôle *τ* ainsi stocké pour informer l'équipement distant 112 de la fréquence de passage de la passerelle 111 dans le mode actif, ou encore, du prochain passage de la passerelle 111 dans le mode actif. L'échange de cette information entre la passerelle 111 et le serveur 110 est particulièrement utile lorsque la passerelle 111 décide seule de la modification du paramètre de contrôle *τ*. Le stockage du paramètre *τ* est suivi par l'attente d'une nouvelle requête par le serveur 110. La réception d'une nouvelle requête provoque le retour à l'étape 501.

Si la requête n'est pas une requête de notification d'une modification du paramètre de contrôle *τ* par la passerelle 111, le serveur 110 détermine, lors d'une étape 519, si la requête est une requête d'interrogation du serveur 110. Si c'est le cas, le serveur 110 poursuit par le contrôle de la liste de demandes de mise en œuvre de service lors d'une étape 521. Lors d'une étape 523 suivante, le serveur 110 vérifie le contenu de ladite liste et construit une requête destinée à l'équipement distant 112. Ladite requête est initialement vide. Si la liste contient des demandes de mise en œuvre de service, le serveur 110 insère dans ladite requête, dans une étape 525, la description des mises en œuvre de service demandées contenues dans la liste.

A la suite de l'étape 523 ou de l'étape 525, le serveur 110 vérifie, lors d'une étape 527, si des modifications du paramètre de contrôle *τ* sont à faire. Les modifications du paramètre de contrôle *τ* peuvent avoir plusieurs origines. Le serveur 110 peut gérer des statistiques sur les demandes de mise en œuvre de service. Par exemple, si le serveur 110 reçoit fréquemment des demandes de mise en œuvre de service, *e.g.* avec une fréquence supérieure à un troisième seuil, le serveur 110 peut augmenter la fréquence de passage de la passerelle 111 en mode actif en diminuant la valeur du paramètre de contrôle τ. Si par contre, les demandes de mise en œuvre de service sont peu fréquentes, par exemple avec une fréquence inférieure à un quatrième seuil, le serveur 110 peut augmenter la valeur du paramètre de contrôle *τ* pour diminuer la fréquence de passage de la passerelle 111 en mode de veille. Dans une variante de réalisation, l'utilisateur fixe la valeur du paramètre de contrôle τ suivant ses besoins en utilisant l'équipement distant 112. Dans ce cas, l'équipement distant 112 envoie une requête spécifique au serveur 110 contenant une nouvelle valeur du paramètre de contrôle *τ*.

Si la valeur du paramètre de contrôle τ doit être modifiée, une nouvelle valeur du paramètre de contrôle τ est insérée dans la réponse destinée à la passerelle 111 et créée lors de l'étape 523. Quel que soit son contenu, la réponse créée lors de l'étape 523 est envoyée à la passerelle 111. Comme décrit plus haut dans la description du fonctionnement de la passerelle 111 en relation avec la Fig. 4, la passerelle 111 adapte son fonctionnement au contenu de la requête. Suite à cet envoi, le serveur 110 attend la réception d'une nouvelle requête. La réception d'une nouvelle requête provoque le retour à l'étape 501.

Si lors de l'étape 519, le type de la requête n'est pas reconnu, le serveur 110 ignore cette requête et attend la réception d'une nouvelle requête. La réception d'une nouvelle requête provoque le retour à l'étape 501.

Si la requête reçue n'est pas une requête provenant de la passerelle 111, le serveur 110 en déduit, lors de l'étape 501, que cette requête est une requête de demande de mise en œuvre de service provenant de l'équipement distant 112. Lors d'une étape 535, le serveur 110 détermine si la passerelle 111 est dans le mode actif. Le serveur 110 peut déduire que la passerelle 111 est en mode actif si, suite à la réception d'une requête de prise en compte de service pour une demande de mise en œuvre de service donnée, aucune requête de fin de service n'a été reçue. Si la passerelle 111 est en mode actif, le serveur 110 détermine, lors d'une étape 537, si l'équipement distant 112 peut accéder directement à la passerelle 111. La décision d'autoriser l'équipement distant 112 à accéder directement à la passerelle 111 peut dépendre de l'état de la passerelle 111. Si la passerelle 111 est en mode actif, l'équipement distant 112 est systématiquement autorisé à accéder directement à la passerelle 111. La décision d'autoriser l'équipement distant 112 à accéder directement à la passerelle 111 peut aussi dépendre du type de service demandé. Dans un mode de réalisation alternatif, la décision d'autoriser l'équipement distant 112 à accéder directement à la passerelle 111 peut prendre en compte le résultat d'une analyse des trafics sur les liens réseaux menant à la passerelle 111 comme par exemple une analyse de type inspection des paquets en profondeur (« deep packet inspection » en terminologie anglo-saxonne). L'analyse du trafic peut être mise en œuvre par la passerelle 111 ou par un équipement indépendant sur le réseau 120. Le résultat de l'analyse peut ensuite être transmis au serveur 110.

Si le serveur 110 autorise l'équipement distant 112 à accéder directement à la passerelle, le serveur 110 envoie une notification d'autorisation d'accès direct à l'équipement distant 112, lors d'une étape 539. Suite à cette notification, le serveur 110 attend la réception d'une nouvelle requête. La réception d'une nouvelle requête provoque le retour à l'étape 501.

Si le serveur 110 n'autorise pas l'équipement distant 112 à accéder directement à la passerelle 111 et qu'une requête destinée à la passerelle 111 est en cours de construction, la demande de mise en œuvre de service est ajoutée dans ladite requête dans l'étape 525. Si aucune requête n'est en cours de construction, la demande de mise en œuvre de service est ajoutée à la liste des demandes de mise en œuvre de service, lors d'une étape 541 (situation non représentée sur la Fig. 5).

Si lors de l'étape 535, le serveur 110 détermine que la passerelle 111 est en mode de veille, le serveur 110 ajoute la demande de mise en œuvre de service contenue dans la requête à la liste des demandes de mise en œuvre de service lors de l'étape 541.

Dans une variante de réalisation de l'étape 541, le serveur 110 est capable d'interpréter la demande de mise en œuvre de service contenue dans la requête. L'interprétation peut conduire le serveur 110 à extraire des paramètres représentatifs pour le service demandé. Par exemple, si le service demandé est un service d'enregistrement vidéo, le serveur 110 peut interpréter la requête et en extraire des paramètres représentatifs tels qu'un canal télévisuel d'enregistrement, une date de début d'enregistrement et une date de fin d'enregistrement. Ce sont alors les paramètres représentatifs résultant de cette interprétation qui sont insérés dans la liste des demandes de mise en œuvre de service. Dans ce cas, la demande de mise en œuvre de service contenue dans la requête de demande de mise en œuvre de service n'est pas recopiée telle quelle, lors de l'étape 525, dans la réponse destinée à la passerelle 111. En effet, dans ce cas, le serveur 110 insère dans la réponse destinée à la passerelle 111, les paramètres obtenus lors de l'interprétation de la demande de mise en œuvre de service stockés dans la liste de demandes de mise en œuvre de service.

Dans une autre variante de réalisation de l'étape 541, l'interprétation de la demande de mise en œuvre de service contenue dans la requête peut conduire le serveur 110 à fixer un paramètre représentatif d'une date d'envoi de la demande de mise en œuvre de service. En effet, si un service demandé doit démarrer à une date de démarrage précise suffisamment éloignée dans le temps pour que plusieurs passages de la passerelle 111 en mode actif successifs puissent se produire, il n'est pas nécessaire d'envoyer une requête à la passerelle 111 pour ce service lors du prochain passage de la passerelle 111 en mode actif. Une telle demande de mise en œuvre de service est alors associée par le serveur 110 à une date d'envoi à la passerelle 111 avant stockage dans la liste des demandes de mise en œuvre de service. La date d'envoi à la passerelle 111 est fixée en prenant en compte une date de démarrage obtenue en interprétant la demande de mise en œuvre de service. Dans ce cas, lors de l'étape 523, seules les demandes de mise en œuvre de service de la liste qui ne sont pas associées à une date, ou dont la date d'envoi est dépassée, sont considérées. Cette mise en œuvre est particulièrement adaptée pour des demandes de service d'enregistrement vidéo sur un PVR, où le démarrage de l'enregistrement est à faire à une date précise éloignée dans le temps, ne nécessitant pas la mise immédiate en mode actif de la passerelle 111.

Dans une autre variante de réalisation de l'étape 541, l'interprétation de la demande de mise en œuvre de service contenue dans la requête peut conduire le serveur 110 à fixer un paramètre représentatif d'une période d'activation d'un service. En effet, un service peut être périodique et doit être mis en œuvre à intervalles réguliers. Dans ce cas, le serveur 110 associe la demande de mise en œuvre de service à une période d'activation. Les services périodiques peuvent être gérés de plusieurs manières par le serveur 110.

Dans un premier mode de réalisation, lorsqu'une demande de mise en œuvre de service correspondant à un service périodique est reçue par le serveur 110, le serveur 110 transmet à la passerelle 111 lors de l'étape 531, une nouvelle valeur du paramètre de contrôle *τ* égale à la valeur de la période du service demandé. Si plusieurs services périodiques sont demandés, chaque service ayant une période différente, le serveur 110 transmet à la passerelle 111 une nouvelle valeur du paramètre de contrôle τ égale au plus grand diviseur commun des périodes des services demandés.

Dans un second mode de réalisation, une demande de mise en œuvre de service périodique n'est considérée par le serveur, lors de l'étape 523, que lorsque le temps écoulé depuis la dernière activation du service approche de la valeur de la période d'activation.

Le premier et le second mode de réalisation sont particulièrement adaptés lorsque le service consiste à permettre à un utilisateur, ou à un opérateur du réseau 120, de faire remonter régulièrement des informations depuis la passerelle 111, ou depuis un capteur connecté à la passerelle 111, comme par exemple un capteur de température et/ou de pression atmosphérique et/ou de taux d'humidité.

Optionnellement, lors d'une étape 543 faisant suite à l'étape 541, le serveur 110 estime la date du prochain passage en mode actif de la passerelle 111 en s'appuyant sur la valeur du paramètre de contrôle *τ*. La date du prochain passage en mode actif de la passerelle 111 peut ensuite être envoyée à l'équipement distant 112 sous forme de notification. Suite à l'étape 541 et/ou à l'étape 543, le serveur 110 attend la réception d'une nouvelle requête. La réception d'une nouvelle requête provoque le retour à l'étape 501.

La **Fig. 6** illustre schématiquement un algorithme, mis en œuvre par l'équipement distant 112, pour effectuer une demande de mise en œuvre de service auprès du serveur 110. On peut noter que l'envoi d'une requête de demande de mise en œuvre de service au serveur 110 peut faire suite à l'échec d'une demande de mise en œuvre de service effectuée directement auprès de la passerelle 111.

Dans une étape 601, l'équipement distant 112 envoie au serveur 110 une requête de demande de mise en œuvre de service. Après une durée plus ou moins longue, dépendante du passage de la passerelle 111 en mode actif, l'équipement distant 112 reçoit, lors d'une étape 602, une notification indiquant que la passerelle 111 est disponible pour mettre en œuvre le service. L'équipement distant 112 met ensuite en œuvre le service conjointement avec la passerelle 111 lors d'une étape 603. La fin du service est notifiée par le serveur 110 à l'équipement distant 112, lors d'une étape 604.

La **Fig. 7** illustre schématiquement un algorithme, mis en œuvre par l'équipement distant 112, en cas de réception d'une notification de la part du serveur 110 indiquant le prochain passage de la passerelle 111 en mode actif.

L'algorithme de la Fig. 7 débute par la réception par l'équipement distant 112 de la notification, dans une étape 631. Dans une étape 632 suivante, l'équipement distant 112 détermine si la passerelle 111 est en mode actif. Si la passerelle 111 n'est pas en mode actif, dans une étape 633, l'équipement distant 112 se met en attente du prochain passage en mode actif de la passerelle 111. Lorsque la passerelle 111 est passée en mode actif, l'équipement distant 112 envoie une requête de demande de mise en œuvre de service au serveur 110 dans une étape 634. L'équipement distant 112 met ensuite en œuvre des étapes 635, 636 et 637 qui sont respectivement en tout points identiques aux étapes 602, 603 et 604 de la Fig. 6.

La **Fig. 8****,** illustre schématiquement un algorithme mis en œuvre par l'équipement distant 112 en cas de réception par l'équipement distant 112 d'une notification d'accès direct à la passerelle 111. Suite à l'envoi au serveur 110 par l'équipement distant 112 d'une requête de demande de mise en œuvre de service lors d'une étape 651, le serveur 110 répond, dans une étape 652, par une notification indiquant à l'équipement distant 112 que l'équipement distant 112 peut accéder directement à la passerelle 111. L'équipement distant 112 envoie ensuite une requête de demande de mise en œuvre de service à la passerelle 111 dans une étape 653. Dans une étape 654 suivante, le serveur 110 reçoit une notification de mise en œuvre de service, en provenance de la passerelle 111. L'équipement distant 112 met ensuite en œuvre le service conjointement avec la passerelle 111 (et un équipement du LAN 115 si nécessaire) lors d'une étape 655. La fin du service est notifiée par la passerelle 111 à l'équipement distant 112 lors d'une étape 656.

## Revendications

1. Procédé mis en œuvre par un dispositif d'interconnexion (111) d'un premier réseau de communication (120) et d'un second réseau de communication (115), ledit dispositif d'interconnexion comprenant une pluralité de composants (1111, 252, 253, 254, 255, 260) comprenant un processeur principal (1111), ladite pluralité de composants fonctionnant suivant un mode de veille assurant une consommation d'énergie minimale ou un mode actif induisant une plus grande consommation énergétique, le mode veille étant obtenu par une coupure de l'alimentation électrique de ladite pluralité de composants, ledit dispositif d'interconnexion effectuant les étapes suivantes:
- passer du mode veille en mode actif (401) la pluralité de composants sous le contrôle d'un processeur secondaire (1110), le processeur secondaire (1110) étant un composant du dispositif d'interconnexion continuellement en mode actif et contrôlant les passages en mode actif de ladite pluralité de composants (1111, 252, 253, 254, 255, 260) à des instants déterminés, le passage en mode de veille étant contrôlé par le dispositif d'interconnexion suite à une fin de mise en œuvre de service,
- suite au passage en mode actif de la pluralité de composants (1111, 252, 253, 254, 255, 260), envoyer (405) une requête d'interrogation à un serveur de gestion de service (110) connecté au premier réseau de communication pour vérifier l'existence de demandes de mise en œuvre de service, ce serveur étant en charge de collecter et de gérer des demandes de mise en œuvre de service,
- recevoir (407) une réponse à la requête d'interrogation, et
- passer en mode de veille (427) la pluralité de composants (1111, 252, 253, 254, 255, 260) par le processeur secondaire à un instant dépendant de la réponse reçue.

2. Procédé selon la revendication 1, **caractérisé en ce que** le processeur secondaire contrôle les instants déterminés de passage en mode actif de la pluralité de composants (1111, 252, 253, 254, 255, 260) en utilisant un paramètre de contrôle.

3. Procédé selon la revendication 2, **caractérisé en ce qu'**un processeur principal (1111) compris dans la pluralité de composants modifie (419) le paramètre de contrôle du processeur secondaire (1110) permettant de contrôler les instants déterminés de passage en mode actif de la pluralité de composants (1111, 252, 253, 254, 255, 260).

4. Procédé selon les revendications 1 à 3, **caractérisé en ce que**, lorsque ladite réponse contient une information représentative d'une demande de mise en œuvre d'un service, le dispositif d'interconnexion met en œuvre un service dépendant d'un service demandé dans la demande de mise en œuvre de service.

5. Procédé selon les revendications 4, **caractérisé en ce que**, le service demandé dans la demande de mise en œuvre de service est destiné à être mis en œuvre par un équipement (113 ; 114) connecté au second réseau, le service dépendant du service demandé dans la demande de mise en œuvre de service étant un service d'accès au second réseau.

6. Procédé selon les revendications 4 ou 5, **caractérisé en ce que** la demande de mise en œuvre de service est préalablement reçue (301) par le serveur de gestion de service de la part d'un équipement distant (112) connecté au premier réseau de communication.

7. Procédé selon la revendication 3, **caractérisé en ce qu'**une information de modification du paramètre de contrôle du processeur secondaire permettant au processeur secondaire de déterminer les instants déterminés de passage en mode actif de la pluralité de composants est obtenue par le dispositif d'interconnexion suite au passage de la pluralité de composants en mode actif.

8. Procédé selon la revendication 7, **caractérisé en ce que** ladite réponse contient l'information de modification.

9. Procédé selon la revendication 7 ou 8, **caractérisé en ce que** l'information de modification est obtenue à partir d'une information provenant d'un utilisateur.

10. Procédé selon l'une quelconque des revendications 2 à 9, **caractérisé en ce que** le paramètre de contrôle est représentatif d'une période de passage en mode actif de la pluralité de composants.

11. Procédé mis en œuvre par un serveur de gestion de service (110) connecté à un premier réseau de communication (120), le premier réseau de communication étant interconnecté à un second réseau de communication (115) par un dispositif d'interconnexion (111), ce serveur étant en charge de collecter et de gérer des demandes de mise en œuvre de service, **caractérisé en ce que**, en cas de réception d'une requête d'interrogation (519) en provenance du dispositif d'interconnexion, le serveur de gestion de service effectue les étapes suivantes :
- vérifier (521) la présence d'une demande de mise en œuvre de service émanant d'un équipement distant (112) dans une liste de demandes de mise en œuvre de service et,
- si une demande de mise en œuvre de service est présente, envoyer (531) une réponse au dispositif d'interconnexion contenant une information représentative de la demande de mise en œuvre de service reçue, lesdites requêtes d'interrogation ayant été envoyées à des instants déterminés correspondant à des passages en mode actif du dispositif d'interconnexion contrôlés par un processeur secondaire (1110) du dispositif d'interconnexion.

12. Procédé selon la revendication 11, **caractérisé en ce que** le serveur de gestion de service interprète (541) chaque demande de mise en œuvre de service afin de déterminer un paramètre représentatif pour la demande de mise en œuvre de service et le paramètre représentatif déterminé est sauvegardé (541) dans la liste de demandes de mise en œuvre de services.

13. Procédé selon la revendication 11, **caractérisé en ce que**, en cas de réception d'une demande de mise en œuvre de service de la part d'un équipement distant (112) connecté au premier réseau, le serveur de gestion de service détermine (535) si le dispositif d'interconnexion est dans un mode actif ou dans un mode de veille et, si le dispositif d'interconnexion est dans un mode actif, le serveur de gestion de service autorise (539) l'équipement distant à contacter directement le dispositif d'interconnexion.

14. Procédé selon la revendication 11, **caractérisé en ce que**, en cas de réception d'une requête d'interrogation en provenance du dispositif d'interconnexion, le serveur de gestion de service obtient (529) une information de modification destinée à modifier un paramètre de contrôle du processeur secondaire du dispositif d'interconnexion permettant de contrôler les instants de passage en mode actif du dispositif d'interconnexion, et envoie (531) une réponse au dispositif d'interconnexion contenant l'information de modification en vue de modifier ledit paramètre de contrôle.

15. Procédé mis en œuvre par un système comprenant un dispositif d'interconnexion (111) d'un premier réseau de communication (120) et d'un second réseau de communication (115) mettant en œuvre le procédé selon l'une quelconque des revendications 1 à 10, un serveur de gestion de service (110), en charge de collecter et de gérer des demandes de mise en œuvre de service, connecté au premier réseau de communication (120) mettant en œuvre le procédé selon l'une quelconque des revendications 11 à 13 et un équipement distant (112) connecté à un premier réseau de communication (120), **caractérisé en ce que** en cas d'échec d'une demande de mise en œuvre de service faite par l'équipement distant (112) auprès du dispositif d'interconnexion (111), l'équipement distant (112) effectue les étapes suivantes :
- envoyer (601) ladite demande de mise en œuvre de service au serveur de gestion de service (110), et
- mettre en œuvre le service (603) après réception (602) d'une notification provenant du serveur de gestion de service (110) indiquant le passage dans un mode actif du dispositif d'interconnexion (111), le serveur de gestion de service (110) ayant été prévenu dudit passage par la réception (519) d'une requête d'interrogation de la part du dispositif d'interconnexion (111), les requêtes d'interrogation étant envoyées à des instants déterminés correspondant à des passages en mode actif du dispositif d'interconnexion (111) contrôlés par un processeur secondaire (1110) du dispositif d'interconnexion (111).

16. Dispositif de type serveur de gestion de service (110) connecté à un premier réseau de communication (120), le premier réseau de communication étant interconnecté à un second réseau de communication (115) par un dispositif d'interconnexion (111), le dispositif comprend les moyens suivants :
- des moyens de réception pour recevoir des requêtes d'interrogation (519) en provenance du dispositif d'interconnexion, lesdites requêtes d'interrogation ayant été envoyées à des instants déterminés correspondant à des passages en mode actif du dispositif d'interconnexion contrôlés par un processeur secondaire (1110) du dispositif d'interconnexion.
- des moyens de vérification (521) pour vérifier, en cas de réception d'une requête d'interrogation, la présence d'une demande de mise en œuvre de service émanant d'un équipement distant (112) dans une liste de demandes de mise en œuvre de service et,
- des moyens d'envoi (531), mis en œuvre si une demande de mise en œuvre de service est présente, pour envoyer une réponse au dispositif d'interconnexion contenant une information représentative de la demande de mise en œuvre de service reçue.

17. Dispositif (111) de type dispositif d'interconnexion d'un premier réseau (120) et d'un second réseau (115), comprenant une pluralité de composants (1111, 252, 253, 254, 255, 260) comprenant un processeur principal (1111), ladite pluralité de composants fonctionnant suivant un mode de veille assurant une consommation d'énergie minimale ou un mode actif induisant une plus grande consommation énergétique, le mode veille étant obtenu par une coupure de l'alimentation électrique de ladite pluralité de composants (1111, 252, 253, 254, 255, 260), le procédé étant, **caractérisé en ce que** le dispositif comprend :
- un processeur secondaire (1110), continuellement en mode actif, contrôlant les passages en mode actif de la pluralité de composants (1111, 252, 253, 254, 255, 260) à des instants déterminés,
- des moyens pour envoyer (255, 405), suite à un passage en mode actif de la pluralité de composants, une requête d'interrogation à un serveur de gestion de service, ce serveur étant en charge de collecter et de gérer des demandes de mise en œuvre de service,
- des moyens pour recevoir une réponse à la requête d'interrogation (255, 407), et
- des moyens pour déterminer un instant de passage en mode de veille en fonction de la réponse reçue.

18. Produit programme d'ordinateur **caractérisé en ce qu'**il comprend des instructions de codes de programme pour exécuter les étapes du procédé selon l'une quelconque des revendications 1 à 10, 11 à 14 ou 15, lorsque ledit programme est exécuté par un processeur.

19. Support de stockage d'informations comprenant un produit programme d'ordinateur selon la revendication précédente.

## Patentansprüche

1. Verfahren, das von einer Zusammenschaltungsvorrichtung (111) eines ersten Kommunikationsnetzes (120) und eines zweiten Kommunikationsnetzes (115) implementiert wird, wobei die Zusammenschaltungsvorrichtung eine einen Hauptprozessor (1111) enthaltende Vielzahl von Bauteilen (1111, 252, 253, 254, 255, 260) enthält, wobei die Vielzahl von Bauteilen gemäß einem Standby-Modus, der einen minimalen Energieverbrauch gewährleistet, oder gemäß einem aktiven Modus arbeitet, der einen größeren Energieverbrauch bewirkt, wobei der Standby-Modus durch eine Unterbrechung der Stromversorgung der Vielzahl von Bauteilen erhalten wird, wobei die Zusammenschaltungsvorrichtung die folgenden Schritte ausführt:
- Wechsel der Vielzahl von Bauteilen unter der Kontrolle eines Sekundärprozessors (1110) vom Standby-Modus in den aktiven Modus (401), wobei der Sekundärprozessor (1110) ein Bauteil der Zusammenschaltungsvorrichtung ist, das durchgehend im aktiven Modus ist und die Wechsel der Vielzahl von Bauteilen (1111, 252, 253, 254, 255, 260) in den aktiven Modus zu bestimmten Zeitpunkten kontrolliert, wobei der Wechsel in den Standby-Modus von der Zusammenschaltungsvorrichtung nach einem Ende einer Dienstimplementierung kontrolliert wird,
- nach dem Wechsel der Vielzahl von Bauteilen (1111, 252, 253, 254, 255, 260) in den aktiven Modus, Senden (405) eines Abfrageantrags an einen mit dem ersten Kommunikationsnetz verbundenen Dienstverwaltungsserver (110), um das Vorhandensein von Dienstimplementierungsanforderungen zu überprüfen, wobei dieser Server dafür verantwortlich ist, Dienstimplementierungsanforderungen zu sammeln und zu verwalten,
- Empfang (407) einer Antwort auf den Abfrageantrag, und
- Wechsel (427) der Vielzahl von Bauteilen (1111, 252, 253, 254, 255, 260) durch den Sekundärprozessor zu einem von der empfangenen Antwort abhängenden Zeitpunkt in den Standby-Modus.

2. Verfahren nach Anspruch 1, **dadurch gekennzeichnet, dass** der Sekundärprozessor die bestimmten Zeitpunkte des Wechsels der Vielzahl von Bauteilen (1111, 252, 253, 254, 255, 260) in den aktiven Modus unter Verwendung eines Kontrollparameters kontrolliert.

3. Verfahren nach Anspruch 2, **dadurch gekennzeichnet, dass** ein in der Vielzahl von Bauteilen enthaltener Hauptprozessor (1111) den Kontrollparameter des Sekundärprozessors (1110) ändert (419), der es ermöglicht, die bestimmten Zeitpunkte des Wechsels der Vielzahl von Bauteilen (1111, 252, 253, 254, 255, 260) in den aktiven Modus zu kontrollieren.

4. Verfahren nach den Ansprüchen 1 bis 3, **dadurch gekennzeichnet, dass**, wenn die Antwort eine für eine Implementierungsanforderung eines Diensts repräsentative Information enthält, die Zusammenschaltungsvorrichtung einen Dienst implementiert, der von einem in der Dienstimplementierungsanforderung angeforderten Dienst abhängt.

5. Verfahren nach Anspruch 4, **dadurch gekennzeichnet, dass** der in der Dienstimplementierungsanforderung angeforderte Dienst dazu bestimmt ist, von einer mit dem zweiten Netz verbundenen Ausrüstung (113; 114) implementiert zu werden, wobei der von dem in der Dienstimplementierungsanforderung angeforderten Dienst abhängende Dienst ein Zugangsdienst zum zweiten Netz ist.

6. Verfahren nach den Ansprüchen 4 oder 5, **dadurch gekennzeichnet, dass** die Dienstimplementierungsanforderung vorab vom Dienstverwaltungsserver von einer fernen Ausrüstung (112) empfangen wird (301), die mit dem ersten Kommunikationsnetz verbunden ist.

7. Verfahren nach Anspruch 3, **dadurch gekennzeichnet, dass** eine Änderungsinformation des Kontrollparameters des Sekundärprozessors, die es dem Sekundärprozessor ermöglicht, die bestimmten Zeitpunkte des Wechsels der Vielzahl von Bauteilen in den aktiven Modus zu bestimmen, von der Zusammenschaltungsvorrichtung nach dem Wechsel der Vielzahl von Bauteilen in den aktiven Modus erhalten wird.

8. Verfahren nach Anspruch 7, **dadurch gekennzeichnet, dass** die Antwort die Änderungsinformation enthält.

9. Verfahren nach Anspruch 7 oder 8, **dadurch gekennzeichnet, dass** die Änderungsinformation ausgehend von einer von einem Benutzer kommenden Information erhalten wird.

10. Verfahren nach einem der Ansprüche 2 bis 9, **dadurch gekennzeichnet, dass** der Kontrollparameter für eine Periode des Wechsels der Vielzahl von Bauteilen in den aktiven Modus repräsentativ ist.

11. Verfahren, das von einem mit einem ersten Kommunikationsnetz (120) verbundenen Dienstverwaltungsserver (110) durchgeführt wird, wobei das erste Kommunikationsnetz mit einem zweiten Kommunikationsnetz (115) durch eine Zusammenschaltungsvorrichtung (111) zusammengeschaltet wird, wobei dieser Server dafür verantwortlich ist, Dienstimplementierungsanforderungen zu sammeln und zu verwalten,
**dadurch gekennzeichnet, dass** der Dienstverwaltungsserver im Fall des Empfangs eines Abfrageantrags (519) von der Zusammenschaltungsvorrichtung die folgenden Schritte ausführt:
- Überprüfung (521) des Vorhandenseins einer von einer fernen Ausrüstung (112) stammenden Dienstimplementierungsanforderung in einer Liste von Dienstimplementierungsanforderungen, und
- wenn eine Dienstimplementierungsanforderung vorhanden ist, Senden (531) einer Antwort an die Zusammenschaltungsvorrichtung, die eine für die empfangene Dienstimplementierungsanforderung repräsentative Information enthält, wobei die Abfrageanträge zu bestimmten Zeitpunkten gesendet wurden, die von einem Sekundärprozessor (1110) der Zusammenschaltungsvorrichtung kontrollierten Wechseln der Zusammenschaltungsvorrichtung in den aktiven Modus entsprechen.

12. Verfahren nach Anspruch 11, **dadurch gekennzeichnet, dass** der Dienstverwaltungsserver jede Dienstimplementierungsanforderung interpretiert (541), um einen für die Dienstimplementierungsanforderung repräsentativen Parameter zu bestimmen, und der bestimmte repräsentative Parameter in der Liste von Dienstimplementierungsanforderungen gesichert wird (541).

13. Verfahren nach Anspruch 11, **dadurch gekennzeichnet, dass** im Fall des Empfangs einer Dienstimplementierungsanforderung von einer mit dem ersten Netz verbundenen fernen Ausrüstung (112) der Dienstverwaltungsserver bestimmt (535), ob die Zusammenschaltungsvorrichtung in einem aktiven Modus oder in einem Standby-Modus ist, und wenn die Zusammenschaltungsvorrichtung in einem aktiven Modus ist, der Dienstverwaltungsserver (539) der fernen Ausrüstung erlaubt (539), die Zusammenschaltungsvorrichtung direkt zu kontaktieren.

14. Verfahren nach Anspruch 11, **dadurch gekennzeichnet, dass** im Fall des Empfangs eines Abfrageantrags von der Zusammenschaltungsvorrichtung der Dienstverwaltungsserver eine Änderungsinformation erhält (529), die dazu bestimmt ist, einen Kontrollparameter des Sekundärprozessors der Zusammenschaltungsvorrichtung zu ändern, der es ermöglicht, die Zeitpunkte des Wechsels der Zusammenschaltungsvorrichtung in den aktiven Modus zu kontrollieren, und eine Antwort an die Zusammenschaltungsvorrichtung sendet (531), die die Änderungsinformation enthält, um den Kontrollparameter zu ändern.

15. Verfahren, das von einem System implementiert wird, das eine Zusammenschaltungsvorrichtung (111) eines ersten Kommunikationsnetzes (120) und eines zweiten Kommunikationsnetzes (115), die das Verfahren nach einem der Ansprüche 1 bis 10 durchführt, einen Dienstverwaltungsserver (110), der dafür verantwortlich ist, Dienstimplementierungsanforderungen zu sammeln und zu verwalten, verbunden mit dem ersten Kommunikationsnetz (120), der das Verfahren nach einem der Ansprüche 11 bis 13 implementiert, und eine mit einem ersten Kommunikationsnetz (120) verbundene ferne Ausrüstung (112) enthält, **dadurch gekennzeichnet, dass** im Fall des Scheiterns einer von der fernen Ausrüstung (112) bei der Zusammenschaltungsvorrichtung (111) getätigten Dienstimplementierungsanforderung die ferne Ausrüstung (112) die folgenden Schritte ausführt:
- Senden (601) der Dienstimplementierungsanforderung an den Dienstverwaltungsserver (110), und
- Implementieren des Diensts (603) nach Empfang (602) einer Benachrichtigung vom Dienstverwaltungsserver (110), die den Wechsel der Zusammenschaltungsvorrichtung (111) in einen aktiven Modus anzeigt, wobei der Dienstverwaltungsserver (110) durch den Empfang (519) eines Abfrageantrags von der Zusammenschaltungsvorrichtung (111) über den Wechsel unterrichtet wurde, wobei die Abfrageanträge zu bestimmten Zeitpunkten entsprechend Wechseln der Zusammenschaltungsvorrichtung (111) in den aktiven Modus gesendet wurden, die von einem Sekundärprozessor (1110) der Zusammenschaltungsvorrichtung (111) kontrolliert werden.

16. Vorrichtung der Art Dienstverwaltungsserver (110) verbunden mit einem ersten Kommunikationsnetz (120), wobei das erste Kommunikationsnetz mit einem zweiten Kommunikationsnetz (115) über eine Zusammenschaltungsvorrichtung (111) zusammengeschaltet wird, wobei die Vorrichtung die folgenden Einrichtungen enthält:
- Empfangseinrichtungen zum Empfang von Abfrageanträgen (519) von der Zusammenschaltungsvorrichtung, wobei die Abfrageanträge zu bestimmten Zeitpunkten gesendet wurden, die Wechseln der Zusammenschaltungsvorrichtung in den aktiven Modus entsprechen, die von einem Sekundärprozessor (1110) der Zusammenschaltungsvorrichtung kontrolliert werden;
- Überprüfungseinrichtungen (521) zur Überprüfung, im Fall des Empfangs eines Abfrageantrags, des Vorhandenseins einer von einer fernen Ausrüstung (112) stammenden Dienstimplementierungsanforderung in einer Liste von Dienstimplementierungsanforderungen, und
- Sendeeinrichtungen (531), die implementiert werden, wenn eine Dienstimplementierungsanforderung vorhanden ist, um eine Antwort an die Zusammenschaltungsvorrichtung zu senden, die eine für die empfangene Dienstimplementierungsanforderung repräsentative Information enthält.

17. Vorrichtung (111) der Art Zusammenschaltungsvorrichtung eines ersten Netzes (120) und eines zweiten Netzes (115), die eine einen Hauptprozessor (1111) enthaltende Vielzahl von Bauteilen (1111, 252, 253, 254, 255, 260) enthält, wobei die Vielzahl von Bauteilen gemäß einem Standby-Modus, der einen minimalen Energieverbrauch gewährleistet, oder gemäß einem aktiven Modus arbeitet, der einen größeren Energieverbrauch bewirkt, wobei der Standby-Modus durch eine Unterbrechung der Stromversorgung der Vielzahl von Bauteilen (1111, 252, 253, 254, 255, 260) erhalten wird, wobei das Verfahren **dadurch gekennzeichnet ist, dass** die Vorrichtung enthält:
- einen Sekundärprozessor (1110), durchgehend im aktiven Modus, der die Wechsel der Vielzahl von Bauteilen (1111, 252, 253, 254, 255, 260) in den aktiven Modus zu bestimmten Zeitpunkten kontrolliert,
- Einrichtungen zum Senden (255, 405), nach einem Wechsel der Vielzahl von Bauteilen in den aktiven Modus, eines Abfrageantrags an einen Dienstverwaltungsserver, wobei dieser Server dafür verantwortlich ist, Dienstimplementierungsanforderungen zu sammeln und zu verwalten,
- Einrichtungen zum Empfang einer Antwort auf den Abfrageantrag (255, 407), und
- Einrichtungen zur Bestimmung eines Zeitpunkts des Wechsels in den Standby-Modus abhängig von der empfangenen Antwort.

18. Computerprogrammprodukt, **dadurch gekennzeichnet, dass** es Programmcodeanweisungen zur Ausführung der Schritte des Verfahrens nach einem der Ansprüche 1 bis 10, 11 bis 14 oder 15 enthält, wenn das Programm von einem Prozessor ausgeführt wird.

19. Informationsspeicherträger, der ein Computerprogrammprodukt nach dem vorhergehenden Anspruch enthält.

## Claims

1. Method implemented by an interconnection device (111) for interconnecting a first communication network (120) and a second communication network (115), said interconnection device comprising a plurality of components (1111, 252, 253, 254, 255, 260) comprising a main processor (1111), said plurality of components operating in a standby mode ensuring minimum energy consumption or an active mode leading to greater energy consumption, the standby mode being obtained by disconnecting the supply of electric power to said plurality of components, said interconnection device performing the following steps:
- switching the plurality of components from standby mode to active mode (401) under the control of a secondary processor (1110), the secondary processor (1110) being a component of the interconnection device continually in active mode and controlling the switches of said plurality of components (1111, 252, 253, 254, 255, 260) to active mode at determined times, the switch to standby mode being controlled by the interconnection device following the end of implementation of a service,
- following the switch of the plurality of components (1111, 252, 253, 254, 255, 260) to active mode, sending (405) an interrogation request to a service management server (110) connected to the first communication network to verify the existence of service implementation requests, this server being responsible for collecting and managing service implementation requests,
- receiving (407) a response to the interrogation request, and
- the secondary processor switching the plurality of components (1111, 252, 253, 254, 255, 260) to standby mode (427) at a time dependent on the received response.

2. Method according to Claim 1, **characterized in that** the secondary processor controls the determined times of switching of the plurality of components (1111, 252, 253, 254, 255, 260) to active mode using a control parameter.

3. Method according to Claim 2, **characterized in that** a main processor (1111) contained in the plurality of components modifies (419) the control parameter of the secondary processor (1110) in order to control the determined times of switching of the plurality of components (1111, 252, 253, 254, 255, 260) to active mode.

4. Method according to one of Claims 1 to 3, **characterized in that**, when said response contains information representative of a request to implement a service, the interconnection device implements a service dependent on a service requested in the service implementation request.

5. Method according to Claim 4, **characterized in that** the service requested in the service implementation request is intended to be implemented by a device (113; 114) connected to the second network, the service dependent on the service requested in the service implementation request being a service for accessing the second network.

6. Method according to Claim 4 or 5, **characterized in that** the service implementation request is received beforehand (301) by the service management server from a remote device (112) connected to the first communication network.

7. Method according to Claim 3, **characterized in that** information for modifying the control parameter of the secondary processor, allowing the secondary processor to determine the determined times of switching of the plurality of components to active mode, is obtained by the interconnection device following the switch of the plurality of components to active mode.

8. Method according to Claim 7, **characterized in that** said response contains the modification information.

9. Method according to Claim 7 or 8, **characterized in that** the modification information is obtained from information originating from a user.

10. Method according to any one of Claims 2 to 9, **characterized in that** the control parameter is representative of a period of switching of the plurality of components to active mode.

11. Method implemented by a service management server (110) connected to a first communication network (120), the first communication network being interconnected to a second communication network (115) by an interconnection device (111), this server being responsible for collecting and managing service implementation requests, **characterized in that**, in the event of receiving an interrogation request (519) from the interconnection device, the service management server performs the following steps:
- verifying (521) the presence of a service implementation request emanating from a remote device (112) in a list of service implementation requests and,
- if a service implementation request is present, sending (531) a response to the interconnection device containing information representative of the received service implementation request, said interrogation requests having been sent at determined times corresponding to switches of the interconnection device to active mode as controlled by a secondary processor (1110) of the interconnection device.

12. Method according to Claim 11, **characterized in that** the service management server interprets (541) each service implementation request in order to determine a representative parameter for the service implementation request, and the determined representative parameter is saved (541) in the list of service implementation requests.

13. Method according to Claim 11, **characterized in that**, in the event of receiving a service implementation request from a remote device (112) connected to the first network, the service management server determines (535) whether the interconnection device is in an active mode or in a standby mode and, if the interconnection device is in an active mode, the service management server authorizes (539) the remote device to directly contact the interconnection device.

14. Method according to Claim 11, **characterized in that**, in the event of receiving an interrogation request from the interconnection device, the service management server obtains (529) modification information intended to modify a control parameter of the secondary processor of the interconnection device in order to control the times of switching of the interconnection device to active mode, and sends (531) a response to the interconnection device containing the modification information with a view to modifying said control parameter.

15. Method implemented by a system comprising an interconnection device (111) for interconnecting a first communication network (120) and a second communication network (115) implementing the method according to any one of Claims 1 to 10, a service management server (110), responsible for collecting and managing service implementation requests, connected to the first communication network (120) implementing the method according to any one of Claims 11 to 13, and a remote device (112) connected to a first communication network (120), **characterized in that**, in the event of failure of a service implementation request made by the remote device (112) to the interconnection device (111), the remote device (112) performs the following steps:
- sending (601) said service implementation request to the service management server (110), and
- implementing the service (603) after receiving (602) a notification originating from the service management server (110) indicating the switch of the interconnection device (111) to an active mode, the service management server (110) having been notified of said switch through the reception (519) of an interrogation request from the interconnection device (111), the interrogation requests being sent at determined times corresponding to switches of the interconnection device (111) to active mode as controlled by a secondary processor (1110) of the interconnection device (111).

16. Service management server device (110) connected to a first communication network (120), the first communication network being interconnected to a second communication network (115) by an interconnection device (111), the device comprising the following means:
- reception means for receiving interrogation requests (519) from the interconnection device, said interrogation requests having been sent at determined times corresponding to switches of the interconnection device to active mode as controlled by a secondary processor (1110) of the interconnection device,
- verification means (521) for verifying, in the event of receiving an interrogation request, the presence of a service implementation request emanating from a remote device (112) in a list of service implementation requests, and
- sending means (531), implemented if a service implementation request is present, for sending a response to the interconnection device containing information representative of the received service implementation request.

17. Interconnection device (111) for interconnecting a first network (120) and a second network (115), comprising a plurality of components (1111, 252, 253, 254, 255, 260) comprising a main processor (1111), said plurality of components operating in a standby mode ensuring minimum energy consumption or an active mode leading to greater energy consumption, the standby mode being obtained by disconnecting the supply of electric power to said plurality of components (1111, 252, 253, 254, 255, 260), the method being **characterized in that** the device comprises:
- a secondary processor (1110), continually in active mode, controlling the switches of the plurality of components (1111, 252, 253, 254, 255, 260) to active mode at determined times,
- means for sending (255, 405), following a switch of the plurality of components to active mode, an interrogation request to a service management server, this server being responsible for collecting and managing service implementation requests,
- means for receiving a response to the interrogation request (255, 407), and
- means for determining a time of switching to standby mode on the basis of the received response.

18. Computer program product, **characterized in that** it comprises program code instructions for executing the steps of the method according to any one of Claims 1 to 10, 11 to 14 or 15 when said program is executed by a processor.

19. Information storage medium comprising a computer program product according to the preceding claim.
